# EUROPÄISCHE PATENTSCHRIFT

(11) **EP 2 001 943 B1**
(45) Veröffentlichungstag und Bekanntmachung des Hinweises auf die Patenterteilung: **21.10.2009**
(21) Anmeldenummer: 07723128.0
(22) Anmeldetag: 09.03.2007
(51) Int. Cl.: C08K 3/04, C08L 77/06

(54) **ZUSAMMENSETZUNG**
COMPOSITION
COMPOSITION

(30) Priorität: 22.03.2006 DE 102006013054
(43) Veröffentlichungstag der Anmeldung: 17.12.2008
(73) Patentinhaber: REHAU AG + Co, 95111 Rehau (DE)
(72) Erfinder: STEFFL, Udo, 95466 Weidenberg (DE)
(86) Internationale Anmeldenummer: PCT/EP2007/002042
(87) Internationale Veröffentlichungsnummer: WO 2007/107250

(56) Entgegenhaltungen:
- EP-A- 0 984 330
- US-A- 5 705 555
- US-B2- 6 828 375

## Beschreibung

Die vorliegende Erfindung betrifft eine hochtemperaturbeständige Werkstoffzusammensetzung aus mindestens zwei kristallinen und einer amorphen Thermoplastphase. Weiterhin eine Werkstoffzusammensetzung, in denen mehrere Füllstoffe selektiv in die kristallinen oder in der amorphen Phasen dispergiert sind, wodurch die Werkstoffzusammensetzung verbesserte Eigenschaften aufweist.

Polymerzusammensetzungen, bestehend aus
(A) einem Polyamid
(B) einem syndiotaktischen monovinylaromatischen Homo- oder Copolymer
(C) einem Polystyrol-Copolymer oder Polystyrol-Pfropfcopolymer und
(D) einem Schlagzähmodifier
sind prinzipiell aus der DE 10221688 A1 bekannt. Solche Zusammensetzungen weisen zwar eine hohe Wärmeformbeständigkeit mit Vicat B50-Werten von größer 170°C auf, sind jedoch nicht leitfähig und besitzen einen großen Längenausdehnungskoeffizienten (LAK), respektive großen Schwund.
Zwar wird auf die optionelle Möglichkeit der Verwendung von Leitfähigkeitsadditiven in DE 10221688 A1 hingewiesen, jedoch keine Lösung zur Herstellung von leitfähigen, fließfähigen Zusammensetzungen mit geringen LAK-Werten und guten Schlagzähigkeitswerten offenbart.

Wie dem Fachmann bekannt ist, verlieren polymere Zusammensetzungen massiv an mechanischen Eigenschaften bei der Zugabe von Leitfähigkeitsadditiven oder Leitrußen. Insbesondere bei der Verwendung von hochleitfähigen Rußen mit einer lod-Adsorption nach DIN 53582 größer 700 mg/g sind die Polymerzusammensetzungen nach dem Stand der Technik spröde und schwierig zu verarbeiten. Für eine weitere Zugabe von Füllstoffen zur Optimierung der LAK-Werte und Schwindungswerte bleibt dann bei leitfähigen Werkstoffzusammensetzungen kein Spielraum.

So wird z. B. in der EP 0692136 B1 versucht, Kohlenstofffibrillen in polymeren Zusammensetzungen einzusetzen, um Kerbschiagzähigkeiten nach IZOD von größer als 2,67 J/cm und Durchgangswiderstände kleiner als 1 x 10¹¹ Ohm cm zu erhalten.

Aus älteren Arbeiten ist bekannt, den Gehalt an Leitfähigkeitsadditiven durch die Zugabe von Synergisten zu erniedrigen und die mechanischen Eigenschaften zu verbessern. In der US 6197858 wird ein N-Alkylarylsulfonamid verwendet, Nigrosin in der US 4391936 oder Imidazol in der US 4337179, Kupferphthalocyaninderivate in der DE 19925221 A1

All diese Lösungen versagen aber, wenn es um die Kombination von hoher Leitfähigkeit, niedrigem LAK-Wert, guter Schlagzähigkeit und Fließfähigkeit geht, so wie es beispielsweise für großflächige, lackierte Automobilaußenteile notwendig ist.

Aufgabe der vorliegenden Erfindung ist es daher, eine Werkstoffzusammensetzung zur Verfügung zu stellen, welche die genannten Nachteile und Probleme nicht aufweist.

Erfindungsgemäß gelingt die Lösung der Aufgabe durch die Merkmale gemäß Anspruch 1.

Bevorzugte Ausführungen und Weiterbildungen der Erfindung sind in den Unteransprüchen ausgeführt.

Die erfindungsgemäße hochtemperaturbeständige Werkstoffzusammensetzung aus mindestens zwei kristallinen Thermoplasten und einem amorphen Thermoplasten besteht mindestens aus folgenden Komponenten:
(I) 100 Gewichtsanteile einer Komponente (A) bestehend aus einem Polyamid 66,
(II) 0,1 bis 150 Gewichtsanteile einer Komponente (B)), bezogen auf Komponente (A), bestehend aus einem Polyamid 6,
(III) 0,1 bis 150 Gewichtsanteile einer Komponente (C), bezogen auf Komponente (A), bestehend aus einem syndiotaktischen Polystyrolhomo- oder - copolymeren,
(IV) 0,1 bis 50 Gewichtsanteile einer Komponente (D), bezogen auf Komponente (A), bestehend aus einem gepfropftem syndiotaktischen Polystyrolhomo- oder - copolymeren,
(V) 0,1 bis 50 Gewichtsanteile einer Komponente (E), bezogen auf Komponente (A), bestehend aus einem Schlagzähmodifier,
(VI) 0,1 bis 100 Gewichtsanteile einer Komponente (F), bezogen auf Komponente (A), bestehend aus einem ersten Ruß,
(VII) 0,1 bis 100 Gewichtsanteile einer Komponente (G), bezogen auf Komponente (A), bestehend aus einem zweiten Ruß,
(VIII) 0,1 bis 100 Gewichtsanteile einer Komponente (H), bezogen auf Komponente (A), bestehend aus einem anorganischen Füllstoff.

Überraschenderweise führt die gezielte Auswahl der Komponenten (A) bis (H) in Funktionalität und Molekulargewicht und insbesondere das selektive Mischen einzelner Komponenten miteinander zu einem überlegenden Eigenschaftsbild, wie es in der Aufgabenstellung und in den Beispielen formuliert ist.

Insbesondere vereint die Zusammensetzung einen niedrigen Durchgangswiderstand mit einem niedrigem LAK-Wert, respektive Schwund, einer guter Schlagzähigkeit und sehr guten Fließfähigkeit.

Im Folgenden wird die Erfindung näher erläutert.

Komponente (A) der erfindungsgemäßen Werkstoffzusammensetzung ist ein Polyamid 66, wobei bevorzugt ein wärmealterungsstabilisiertes Polyamid 66 mit Viskositätszahl nach ISO 307 gemessen in 96%-iger Schwefelsäure von kleiner 175 ml/g verwendet wird.
Als Wärmealterungsstabilisatoren werden bevorzugt Kupferverbindungen, phenolische Antioxidantien oder aminische Antioxidantien eingesetzt.

Das Polyamid 6 der Komponente (B) weist bevorzugt eine Viskositätszahl nach ISO 307 gemessen in 96 %-iger Schwefelsäure von 115 bis 135 ml/g auf.
Der Gewichtsanteil der Komponenten (B), bezogen auf die Komponente (A), kann zwischen 0,1 und 150 Teilen betragen.

Das syndiotaktische monovinylaromatische Homo-oder Copolymer der Komponente (C) kann ein syndiotaktisches Polystyrol-Homo- oder -copolymeres sein, bevorzugt mit einem Molekulargewicht Mw nach DIN 55672 von 160 bis 199 kg/mol.

Der Gewichtsanteil der Komponenten (C), bezogen auf die Komponente (A), kann zwischen 0,1 und 150 Teilen betragen.

Das gepfropfte syndiotaktische Polystyrolhomo- oder -copolymere der Komponente (D), das aus syndiotaktischem Polystyrol durch Pfropfen von Maleinsäureanhydrid oder Ithaconsäureanhydrid oder (Meth)Acrylsäure und deren Ester entstanden ist, ist zwischen 0,1 bis 50 Teilen bezogen auf Komponente (A) enthalten.

Die Komponente (D) der erfindungsgemäßen Werkstoffzusammensetzung wirkt dabei als Phasenvermittler für (A), (B) und (C) so dass das syndiotaktische monovinylaromatische Homo-oder Copolymer (C) an die Polyamide (A) und (B) chemisch angekoppelt wird.
Bei einem bevorzugten Molekulargewicht Mw von 160 bis199 kg/mol wird die Fließfähigkeit der Zusammensetzung positiv beeinflusst.

Der Schlagzähmodifier der Komponente (E) kann ausgewählt sein
- aus der Gruppe Naturkautschuk, Polybutadien, Polyisopren, Polyisobutylen,
- aus einem Mischpolymerisat des Butadiens und/oder Isoprens mit Styrol und anderen Comonomeren, einem hydrierten Mischpolymerisat und/oder einem Mischpolymerisat, das durch Pfropfen mit Maleinsäureanhydrid, Ithaconsäureanhydrid, (Meth)acrylsäure und deren Ester entstanden ist.

Der Schlagzähmodifier kann auch
- ein Pfropfkautschuk mit einem vernetzen elastomeren Kern sein, der aus Butadien, Isopren oder Alkylacrylaten besteht und eine Pfropfhülle aus Polystyrol hat,
- ein unpolares oder polares Olefinhomo- und Copolymeres wie Ethylen-Propylen-, Ethylen-Propylen-Dien- und Ethylen-Octen- oder Ethylen-Vinylacteat-Kautschuk oder
- ein unpolares oder polares Olefinhomo- und Copolymeres, das durch Pfropfen mit Maleinsäureanhydrid, Ithaconsäureanhydrid, (Meth)acrylsäure und deren Ester entstanden ist, sein.

Der Schlagzähmodifier kann auch ein carbonsäurefunküonalisiertes Copolymeres wie Poly(ethen-co-(meth)acrylsäure) oder Poly(ethen-co-1-olefin-co-(meth)acrylsäure) sein, wobei das 1-Olefin ein Alken oder ein ungesättigter (Meth)Acrylsäureester mit mehr als 4 Atomen ist, einschließlich solchen Copolymeren, in denen die Säuregruppen teilweise mit Metallionen neutralisiert sind.

Besonders bevorzugt sind durch Pfropfen mit Maleinsäureanhydrid funktionalisierte Mischpolymerisate des Butadiens mit Styrol, unpolare oder polare Olefinhomo- und Copolymere, die durch Pfropfen mit Maleinsäureanhydrid entstanden sind und carbonsäurefunktionalisierte Copolymere wie Poly(ethen-co-(meth)acrylsäure) oder Poly(ethen-co-1-olefin-co-(meth)acrylsäure), in denen die Säuregruppen teilweise mit Metallionen neutralisiert sind.

Der Gewichtsanteil der Komponenten (E), bezogen auf die Komponente (A), kann zwischen 0,1 und 50 Teilen betragen.

Der Ruß der Komponente (F) besteht zu mehr als 96 % aus feinteiligem Kohlenstoff und geringen Mengen an Sauerstoff, Wasserstoff und Stickstoff und besitzt eine lod-Adsorption nach DIN 53582 von kleiner 150 mg/g.
Der Gewichtsanteil der Komponenten (F), bezogen auf die Komponente (A), kann zwischen 0,1 und 100 Teilen betragen.

Der Ruß der Komponente (G) besteht zu mehr als 96 % aus feinteiligem Kohlenstoff und geringen Mengen an Sauerstoff, Wasserstoff und Stickstoff und besitzt eine lod-Adsorption nach DIN 53582 von größer 700 mg/g.
Der Gewichtsanteil der Komponenten (G), bezogen auf die Komponente (A), kann zwischen 0,1 und 100 Teilen betragen.

Der anorganische Füllstoff der Komponente (H) ist ausgewählt aus der Gruppe Magnesiumhydroxid, Calciumcarbonat, Talkum, Wollastonit, Kieselsäure, Mica oder durch Kationen- oder Anionenaustausch modifizierte Silikate mit ionischen Schichtladungen, bevorzugt aufgeschlämmt in Öl- oder Fettkomponenten.

Die Werkstoffzusammensetzung kann gegebenenfalls bis zu 200 Gewichtsanteilen Zusätze, bezogen auf Komponente (A), enthalten, in Form von bis zu 5 Gewichtsanteilen Gleit- oder Verarbeitungshilfsmittel, bis zu 5 Gewichtsanteilen Pigmente, bis zu 2 Gewichtsanteilen Nukleierungsmittel, bis zu 1 Gewichtsanteil Stabilisatoren, bis zu 2 Gewichtsanteilen Treibmittel, bis zu 2 Gewichtsanteilen Antistatika oder bis zu 50 Gewichtsanteilen Glasfaser.

Besonders vorteilhaft hat sich ein Verfahren zur Herstellung der hochtemperaturbeständigen Werkstoffzusammensetzung herauskristallisiert, bei dem in einem ersten Schritt
- Komponente (G) mit Komponente (E) zu einem Vorcompound 1,
- Komponente (F) mit einem Teil der Komponente (A) zu einem Vorcompound 2 und
- Komponente (H) mit einem Teil der Komponente (A) zu einem Vorcompound 3 umgesetzt werden, bevor in einem zweiten Schritt alle so generierten Mischungen mit den Komponenten (B), (C) und (D) und dem Rest von Komponente (A) weiter umgesetzt werden.

In einem ersten Schritt werden also die Komponenten (F) und (H) jeweils separat mit einem Teil der Komponente (A) und Komponente (G) mit Komponente (E) umgesetzt, bevor in einem zweiten Schritt alle so generierten Mischungen mit den Komponenten (B), (C) und (D) und dem Rest von Komponente (A) weiter umgesetzt werden.

Der Gewichtsanteil des Vorcompounds 1 bezogen auf Komponente (A) kann zwischen 0,1 und 50 Teilen betragen.

Der Gewichtsanteil des Vorcompounds 2 bezogen auf Komponente (A) kann zwischen 0,1 und 100 Teilen betragen.

Bevorzugt ist gemäß der vorliegenden Erfindung ein Verhältnis von Vorcompound 1 zu Vorcompound 2 zwischen 1 : 5 und 5 : 1, ganz besonders bevorzugt ein Verhältnis von Vorcompound 1 zu Vorcompound 2 von 1 : 1 bis zu 1 : 3.

Bevorzugt ist ein Verhältnis von Komponente (F) zu Komponente (G) zwischen 1 : 5 und 5 : 1, ganz besonders bevorzugt ein Verhältnis von Komponente (F) zu Komponente (G) von 4 : 1 bis zu 1 : 1.

Die erfindungsgemäße Werkstoffzusammensetzung wird bevorzugt im Automobilbau für lackierte Außenhautformteile wie beispielsweise Kunststoffkotflügel, Tankklappen, Motorhauben, Heckdeckel, Türverkleidungen, Schwellerverkleidungen und ähnliches eingesetzt.

Die folgenden Beispiele erläutern die vorliegende Erfindung, ohne jedoch darauf beschränkt zu sein.

### Herstellung der Vorcompounds 1 bis 3 gemäß Tabelle 1

Die Vorcompounds 1 bis 3 weisen die in der Tabelle 1 angegebenen Zusammensetzungen auf.

Herstellung des Vorcompounds 1 aus Komponente (E) und (G):
Auf einem Buss-Kneter mit Dosiereinrichtung für Granulate und Pulver wird bei Temperaturen zwischen 160 und 200°C granulatförmiger Schlagzähmodifier (E) dosiert. Über die Pulverwaage wird der Ruß (G) stromabwärts zudosiert und die Mischung aufgeschmolzen, strangförmig extrudiert und geschnitten. Das resultierende Vorcompound 1 aus Komponente (E) und (G) hat die unter [9] angegebenen Eigenschaften.

Herstellung des Vorcompounds 2 aus Komponente (A) und (F):
Auf einem Buss-Kneter mit Dosiereinrichtung für Granulate und Pulver wird bei Temperaturen zwischen 260 und 300°C granulatförmiges Polyamid 66 (A) dosiert.
Über die Pulverwaage wird der Ruß (F) stromabwärts zudosiert und die Mischung aufgeschmolzen, strangförmig extrudiert und geschnitten. Das resultierende Vorcompound 2 aus Komponente (A) und (F) hat die unter [10] angegebenen Eigenschaften.

Herstellung des Vorcompounds 3 aus Komponente (A) und (H):
Auf einem Zweischneckenextruder mit Dosiereinrichtung für Granulate und Pulver wird bei Temperaturen zwischen 260 und 300°C granulatförmiges Polyamid 66 (A) dosiert.
Über die Pulverwaage wird der Füllstoff (H) stromabwärts zudosiert und die Mischung aufgeschmolzen, strangförmig extrudiert und geschnitten. Das resultierende Vorcompound 3 aus Komponente (A) und (H) hat die unter [11] angegebenen Eigenschaften.

**Tabelle 1**

| Vorcompound 1: | Vorcompound 2: | Vorcompound 3: |
|---|---|---|
| 100 T PE-MAH (E) [5] | 100 T Polyamid 66 (A) [1] | 100 T Polyamid 66 (A) [1] |
| 29,9 T Ruß (G) [8] | 53,8 T Ruß (F) [7] | 42,9 T Talkum (H) [6] |

### Herstellung der erfindungsgemäßen Werkstoffzusammensetzung, Beispiele 1 bis 6:

Auf einem Zweischneckenextruder mit Dosiereinrichtung für Granulate und Pulver wird bei Temperaturen zwischen 280 und 330°C gemäß Tabelle 2 granulatförmiges Polyamid 66 (A), Polyamid 6 (B), syndiotaktisches monovinylaromatisches Homo-oder Copolymeres (C) und die Vorcompounds aus (E) und (G) (Vorcompound 1) und (A) und (F) (Vorcompound 2) und (A) und (H) (Vorcompound 3) dosiert. Über die Pulverwaage wird das gepfropfte syndiotaktische Polystyrol homo- oder -copolymere (D) und gegebenenfalls Stabilisatoren zudosiert und die Mischung aufgeschmolzen, strangförmig extrudiert und geschnitten. Die resultierenden Werkstoffzusammensetzungen haben die in der Tabelle angegebenen Eigenschaften.

Die Zusammensetzungen sind in Gewichtsanteilen bezogen auf 100 Gewichtsanteile der Komponente (A) angegeben und sind für die folgenden Beispiele bzw. Vergleichsbeispiele aus den Tabellen 2 und 3 ersichtlich.

**Tabelle 2**

| Beispiel 1: | Beispiel 2: | Beispiel 3: |
|---|---|---|
| 100 T Polyamid 66 (A) [1] 100 | T Polyamid 66 (A) [1] | 100 T Polyamid 66 (A) [1] |
| 35,7 T Polyamid 6 (B) [2] | 35,7 T Polyamid 6 (B) [2] | 35,7 T Polyamid 6 (B) [2] |
| 43 T sPS (C) [3] | 43 T sPS (C) [3] | 43 T sPS (C) [3] |
| 26,3 T Vorcompound 1 | 26,3 T Vorcompound 1 | 26,3 T Vorcompound 1 |
| 48,2 T Vorcompound 2 | 29,2 T Vorcompound 2 | 58,5 T Vorcompound 2 |
| 23,4 T Vorcompound 3 | 23,4 T Vorcompound 3 | 23,4 T Vorcompound 3 |
| 15,5 T sPS-MAH (D) [4] | 15,5 T sPS-MAH (D) [4] | 15,5 T sPS-MAH (D) [4] |

| Beispiel 4: | Beispiel 5: | Beispiel 6: |
|---|---|---|
| 100 T Polyamid 66 (A) [1] | 100 T Polyamid 66 (A) [1] | 100 T Polyamid 66 (A) [1] |
| 35,7 T Polyamid 6 (B) [2] | 46,8 T Polyamid 6 (B) [2] | 46,8 T Polyamid 6 (B) [2] |
| 43 T sPS (C) [3] | 43 T sPS (C) [3] | 43 T sPS (C) [3] |
| 26,3 T Vorcompound 1 | 26,3 T Vorcompound 1 | 35,1 T Vorcompound 1 |
| 48,2 T Vorcompound 2 | 48,2 T Vorcompound 2 | 48,2 T Vorcompound 2 |
| 23,4 T Vorcompound 3 | 23,4 T Vorcompound 3 | 23,4 T Vorcompound 3 |
| 15,5 T sPS-MAH (D) [4] 2 | 15,5 T sPS-MAH (D) [4] | 15,5 T sPS-MAH (D) [4] |

### Herstellung der Vergleichsbeispiele 1 bis 2:

Auf einem Zweischneckenextruder mit Dosiereinrichtung für Granulate und Pulver wird bei Temperaturen zwischen 280 und 330°C granulatförmiges Polyamid 66 (A), Polyamid 6 (B), syndiotaktisches monovinylaromatisches Homo-oder Copolymeres (C) und Schlagzähkomponente (D) gemäß Tabelle 3 dosiert. Über die Pulverwaage wird das gepfropfte syndiotaktische Polystyrolhomo- oder -copolymere (D), gegebenenfalls Stabilisatoren, der Füllstoff (H) und der Ruß (alternativ (G) oder (F)) zudosiert und die Mischung aufgeschmolzen, strangförmig extrudiert und geschnitten. Die resultierenden Werkstoffzusammensetzungen haben die in der Tabelle angegebenen Eigenschaften.

**Tabelle 3**

| Vergleichsbeispiel 1: | Vergleichsbeispiel 2: |
|---|---|
| 100 T Polyamid 66 (A) [1] | 100 T Polyamid 66 (A) [1] |
| 35,7 T Polyamid 6 (B) [2] | 35,7 T Polyamid 6 (B) [2] |
| 43 T sPS (C) [3] | 43 T sPS (C) [3] |
| 20,5 T PE-MAH [5] | 20,5 T PE-MAH [5] |
| 15,5 T sPS-MAH (D) [4] | 15,5 T sPS-MAH (D) [4] |
| 12,0 T Ruß (G) [8] | 38,0 T Ruß (F) [7] |
| 29,2 T Talkum (H) [6] | 29,2 T Talkum (H) [6] |

Die Komponenten sind wie folgt definiert:
[1] Polyamid 66: Schmelzpunkt (ISO 3146) 260°C, spezifische Dichte (ISO 1183) 1,13 g/cm3, Viskositätszahl (ISO 307) 150 ml/g
[2] Polyamid 6: Schmelzpunkt (ISO 3146) 220°C, spezifische Dichte (ISO 1183) 1,12 g/cm3, Viskositätszahl (ISO 307) 115 - 135 ml/g
[3] Syndiotaktisches Polystyrol sPS: massenmittleres Molekulargewicht (DIN 55672) 160 - 199 kg/mol
[4] Polystyrolpfropfcopolymeres sPS-MAH (mit Maleinsäureanhydrid gepfropftes sPS): MAH-Gehalt 1,5%
[5] Schlagzähmodifier PE-MAH (mit Maleinsäureanhydrid gepfropftes Ethylen-Octen-Copolymeres): Dichte (ISO 1183) 0,87 g/cm3, MFR (190°C, 2,16 kg, ISO 1133) 1,2 g/10min
[6] Füllstoff: Talkum, Partikelgröße 5 µm
[7] Ruß: Partikelgröße 40 nm, lod-Adsorption (DIN 53582) 100 mg/g
[8] Ruß: Partikelgröße 30 nm, lod-Adsorption (DIN 53582) 1000 - 1150 mg/g
[9] Vorcompound 1 aus Komponente (E) und (G): 23 % Ruß, MFR (190°C, 2,16 kg, ISO 1133) nicht messbar
[10] Vorcompound 2 aus Komponente (F) und (A): 35 % Ruß, MFR (300°C, 10 kg, ISO 1133) 1,3 g/10min
[11] Vorcompound 3 aus Komponente (H) und (A): 30 % Talkum, MFR (300°C, 10 kg, ISO 1133) 7 g/10min.

### Beispiele 1 bis 6:

Die nachfolgende Tabelle 4 zeigt die mechanischen Eigenschaften der erfindungsgemäßen Werkstoffzusammensetzungen, Tabelle 5 die mechanischen Eigenschaften der Vergleichsbeispiele 1 bis 2.

**Tabelle 4**

| Eigenschaft | Einheit | Norm | Beispiel 1 | Beispiel 2 | Beispiel 3 |
|---|---|---|---|---|---|
| Zug-E-Modul | [MPa] | ISO 527 | 3840 | 3720 | 3900 |
| Reißdehnung | [%] | DIN 53504 | 4 | 5 | 4 |
| Zugfestigkeit | [N/mm²] | DIN 53504 | 63 | 61 | 65 |
| LAK (23/80°C) quer / längs | [10⁻⁵ K⁻¹] | DIN 53752 | 7,0/7,8 | 7,0 / 7,9 | 6,9 / 7,6 |
| Schlagzähigkeit 23°C | [kJ/m²] | ISO 179 | Ohne Bruch | Ohne Bruch | Ohne Bruch |
| Schlagzähigkeit -30°C | [kJ/m²] | ISO 179 | 52 | 78 | 48 |
| MFR 5 kg/280°C | [g/10min] | ISO 1133 | 10 | 14 | 9 |
| Durchgangswiderstand | [Ohmcm] | REHAU | 9,6 x 10⁴ | 9,9 x 10⁵ | 1,0 x x 10³ |
| | | | | | |

| Eigenschaft | Einheit | Norm | Beispiel 4 | Beispiel 5 | Beispiel 6 |
|---|---|---|---|---|---|
| Zug-E-Modul | [MPa] | ISO 527 | 3980 | 3540 | 3120 |
| Reißdehnung | [%] | DIN 53504 | 3 | 7 | 10 |
| Zugfestigkeit | [N/mm²] | DIN 53504 | 69 | 61 | 52 |
| LAK (23/80°C) quer / längs | [10⁻⁵ K⁻¹] | DIN 53752 | 6,5 / 6.9 | 7,0 / 7,9 | 7,4/7,9 |
| Schlagzähigkeit 23°C | [kJ/m²] | ISO 179 | Ohne Bruch | Ohne Bruch | Ohne Bruch |
| Schlagzähigkeit -30°C | [kJ/m²] | ISO 179 | 42 | Ohne Bruch | Ohne Bruch |
| MFR 5 kg/280°C | [g/10min] | ISO 1133 | 8 | 11 | 8 |
| Durchgangswiderstand | [Ohmcm] | REHAU | 1,0 x 10⁴ | 9,1 x 10⁵ | 5,0 x x 10⁴ |

**Tabelle 5**

| Eigenschaft | Einheit | Norm | Vergleichsbeispiel 1 | Vergleichsbeispiel 2 |
|---|---|---|---|---|
| Zug-E-Modul | [MPa] | ISO 527 | 2990 | 3630 |
| Reißdehnung | [%] | DIN 53504 | 1,5 | 5 |
| Zugfestigkeit | [N/mm²] | DIN 53504 | 69 | 61 |
| LAK (23/80°C) quer / längs | [10⁻⁵ K⁻¹] | DIN 53752 | 7,0 / 7,5 | 7,6 / 8,5 |
| Schlagzähigkeit 23°C | [kJ/m²] | ISO 179 | 32 | 56 |
| Schlagzähigkeit -30°C | [kJ/m²] | ISO 179 | 31 | 42 |
| MFR 5 kg/280°C | [g/10min] | ISO 1133 | 0,5 | 2 |
| Durchgangswiderstand | [Ohmcm] | REHAU | 8,9 x 10⁴ | 2,0 x 10³ |

Wie aus den Tabellen 4 und 5 ersichtlich ist, führt die direkte Einarbeitung des Rußes (G) in die Werkstoffzusammensetzung (Vergleichsbeispiel 1) ohne den Weg über das Vorcompound 1 zu einer Erniedrigung des Schlagzähigkeit, Fließfähigkeit und des Zug-E-Moduls. Gleiches gilt - wenn auch geringer ausgeprägt - für Vergleichsbeispiel 2, wo der direkt eingearbeitete Ruß (F) ohne den Weg über das Vorcompound 2 zu einer Erniedrigung der Schlagzähigkeit und Fließfähigkeit bei gegebenem Durchgangswiderstand zwischen 10³ und 10⁵ Ohm cm führt.

## Patentansprüche

1. Hochtemperaturbeständige Werkstoffzusammensetzung aus teilkristallinen Thermoplasten mit verbesserten mechanischen Eigenschaften, bestehend mindestens aus folgenden Komponenten:
(I) 100 Gewichtsanteile einer Komponente (A) bestehend aus einem Polyamid 66,
(II) 0,1 bis 150 Gewichtsanteile einer Komponente (B), bezogen auf Komponente (A), bestehend aus einem Polyamid 6,
(III) 0,1 bis 150 Gewichtsanteile einer Komponente (C), bezogen auf Komponente (A), bestehend aus einem syndiotaktischen Polystyrolhomo- oder - copolymeren,
(IV) 0,1 bis 50 Gewichtsanteile einer Komponente (D), bezogen auf Komponente (A), bestehend aus einem gepfropftem syndiotaktischen Polystyrolhomo- oder - copolymeren,
(V) 0,1 bis 50 Gewichtsanteile einer Komponente (E), bezogen auf Komponente (A), bestehend aus einem Schlagzähmodifier,
(VI) 0,1 bis 100 Gewichtsanteile einer Komponente (F), bezogen auf Komponente (A), bestehend aus einem ersten Ruß der eine lod-Adsorption nach DIN 53582 von kleiner 150 mg/g aufweist,
(VII) 0,1 bis 100 Gewichtsanteile einer Komponente (G), bezogen auf Komponente (A), bestehend aus einem zweiten Ruß, der eine Iod-Adsorption nach DIN 53582 von größer 700 mg/g aufweist,
(VIII) 0,1 bis 100 Gewichtsanteile einer Komponente (H), bezogen auf Komponente (A), bestehend aus einem anorganischen Füllstoff,
wobei in einem ersten Schritt die Komponenten (F) und (H) jeweils separat mit einem Teil der Komponente (A) und Komponente (G) mit Komponente (E) umgesetzt werden, bevor in einem zweiten Schritt alle so generierten Mischungen mit den Komponenten (B), (C) und (D) und dem Rest von Komponente (A) weiter umgesetzt werden und die Werkstoffzusammensetzung eine Fließfähigkeit (melt flow ratio) nach DIN ISO 1133 von größer 8 gemessen bei 280 °C / 5 kg, eine Schlagzähigkeit nach ISO 179 ohne Bruch, einen Längenausdehnungskoeffizienten nach DIN 53752 bei 23 bis 80°C von kleiner 80 x 10⁻⁵ K aufweist, bei einem Durchgangswiderstand von kleiner 10¹⁰ Ohm cm.

2. Hochtemperaturbeständige Werkstoffzusammensetzung nach Anspruch 1, **dadurch gekennzeichnet, dass** das Polyamid 66 aus Komponente (A) bevorzugt ein wärmealterungsstabilisiertes Polyamid 66 mit Viskositätszahl nach ISO 307 gemessen in 96 %-iger Schwefelsäure von kleiner 175 ml/g aufweist.

3. Hochtemperaturbeständige Werkstoffzusammensetzung nach Anspruch 1, **dadurch gekennzeichnet, dass** das Polyamid 6 der Komponente (B) bevorzugt eine Viskositätszahl nach ISO 307 gemessen in 96 %-iger Schwefelsäure von 115 bis 135 ml/g aufweist.

4. Hochtemperaturbeständige Werkstoffzusammensetzung nach Anspruch 1, **dadurch gekennzeichnet, dass** das syndiotaktische Polystyrol-Homo- oder -copolymere der Komponente (C) ein Molekulargewicht Mw nach DIN 55672 von 160 bis 199 kg/mol aufweist.

5. Hochtemperaturbeständige Werkstoffzusammensetzung nach Anspruch 1, **dadurch gekennzeichnet, dass** Komponente (D) ein Polystyrolpfropfcopolymeres aus syndiotaktischem Polystyrol ist, entstanden durch Pfropfen von Maleinsäureanhydrid oder Ithaconsäureanhydrid, oder (Methy)Acrylsäure und deren Ester ist.

6. Hochtemperaturbeständige Werkstoffzusammensetzung nach Anspruch 1, **dadurch gekennzeichnet, dass** der Schlagzähmodifier der Komponente (E) ausgewählt ist aus der Gruppe
- Naturkautschuk, Polybutadien, Polyisopren, Polyisobutylen, Mischpolymerisate des Butadiens und/oder Isoprens mit Styrol und anderen Comonomeren, oder
- eines hydrierten Mischpolymerisats und/oder eines Mischpolymerisats, das durch Pfropfen mit Maleinsäureanhydrid, Ithaconsäureanhydrid, (Meth)acrylsäure und deren Ester, oder
- eines Pfropfkautschuks mit einem vernetzen elastomeren Kern, der aus Butadien, Isopren oder Alkylacrylaten besteht und eine Pfropfhülle aus Polystyrol hat, oder
- eines unpolaren oder polaren Olefinhomo- und Copolymeren wie Ethylen-Propylen-, Ethylen-Propylen-Dien- und Ethylen-Octen- oder Ethylen-Vinylacteat-Kautschuk, oder
- eines unpolaren oder polaren Olefinhomo- und Copolymeren, das durch Pfropfen mit Maleinsäureanhydrid, lthaconsäureanhydrid, (Meth)acrylsäure und deren Ester entstanden ist, oder
- eines carbonsäurefunktionalisierten Copolymeren, wie Poly(ethen-co-(meth)acrylsäure) oder Poly(ethen-co-1-olefin-co-(meth)acrylsäure), wobei das 1-Olefin ein Alken oder ein ungesättigter (Meth)Acrylsäureester mit mehr als 4 Atomen ist, einschließlich solchen Copolymeren, in denen die Säuregruppen teilweise mit Metallionen neutralisiert sind.

7. Hochtemperaturbeständige Werkstoffzusammensetzung nach Anspruch 6, **dadurch gekennzeichnet, dass** der Schlagzähmodifier der Komponente (E) besonders bevorzugt ein durch Pfropfen mit Maleinsäureanhydrid funktionalisiertes Mischpolymerisat des Butadiens mit Styrol ist und/oder ein unpolares oder polares Olefinhomo- und-copolymeres, das durch Pfropfen mit Maleinsäureanhydrid entstanden ist.

8. Hochtemperaturbeständige Werkstoffzusammensetzung nach Anspruch 1, **dadurch gekennzeichnet, dass** der anorganische Füllstoff der Komponente (H) ausgewählt ist aus der Gruppe Magnesiumhydroxid, Calciumcarbonat, Talkum, Wollastonit, Kieselsäure oder durch Kationen- oder Anionenaustausch modifizierte Silikate mit ionischen Schichtladungen, bevorzugt aufgeschlämmt in Öl- oder Fettkomponenten.

9. Verwendung der hochtemperaturbeständigen Werkstoffzusammensetzung gemäß einer der Ansprüche 1 bis 8 bevorzugt zur Herstellung von lackierten Formteilen für die Automobilindustrie, insbesondere lackierte Außenanbauformteile an Automobilen.

10. Verfahren zur Herstellung der hochtemperaturbeständigen Werkstoffzusammensetzung gemäß einem der Ansprüche 1 bis 8, wobei in einem ersten Schritt die Komponenten (F) und (H) jeweils separat mit einem Teil der Komponente (A) und Komponente (G) mit Komponente (E) umgesetzt werden, bevor in einem zweiten Schritt alle so generierten Mischungen mit den Komponenten (B), (C) und (D) und dem Rest von Komponente (A) weiter umgesetzt werden.

11. Verfahren zur Herstellung der hochtemperaturbeständigen Werkstoffzusammensetzung nach Anspruch 10, wobei das Vorcompound 3 aus Komponente (A) und (H) auf einem Zweischneckenextruder compoundiert wird, und die Vorcompounds 1 aus Komponente (E) und (G)und 2 aus Komponente (A) und (F) mittels einer Vorrichtung compoundiert werden, die wenig Energie in die Mischung einträgt.

12. Verfahren zur Herstellung der hochtemperaturbeständigen Werkstoffzusammensetzung nach einem der Ansprüche 10 oder 11, wobei der Gewichtsanteil des Vorcompounds 1 aus Komponente (E) und (G) bezogen auf Komponente (A) zwischen 0,1 und 50 Teile, oder wobei der Gewichtsanteil des Vorcompounds 2 aus Komponente (A) und (F) bezogen auf Komponente (A) zwischen 0,1 und 100 Teile gewählt wird.

13. Verfahren zur Herstellung der hochtemperaturbeständigen Werkstoffzusammensetzung nach einem der Ansprüche 10 bis 12, wobei bevorzugt ein Verhältnis von Vorcompound 1 aus Komponente (E) und (G) zu Vorcompound 2 aus Komponente (A) und (F) zwischen 1 : 5 und 5 : 1, und ganz besonders bevorzugt ein Verhältnis von Vorcompound 1 aus Komponente (E) und (G) zu Vorcompound 2 aus Komponente (A) und (F) von 1 : 1 bis zu 1 : 3 gewählt wird.

## Claims

1. High-temperature-resistant materials composition composed of semicrystalline thermoplastics with improved mechanical properties, composed at least of the following components:
(I) 100 parts by weight of a component (A) composed of a nylon-6,6,
(II) from 0.1 to 150 parts by weight of a component (B), based on component (A), composed of a nylon-6,
(III) from 0.1 to 150 parts by weight of a component (C), based on component (A), composed of a syndiotactic polystyrenehomo- or copolymer,
(IV) from 0.1 to 50 parts by weight of a component (D), based on component (A), composed of a grafted syndiotactic polystyrenehomo- or copolymer,
(V) from 0.1 to 50 parts by weight of a component (E), based on component (A), composed of an impact modifier,
(VI) from 0.1 to 100 parts by weight of a component (F), based on component (A), composed of a first carbon black, the iodine adsorption of which is smaller than 150 mg/g to DIN 53582,
(VII) from 0.1 to 100 parts by weight of a component (G), based on component (A), composed of a second carbon black, the iodine adsorption of which is greater than 700 mg/g to DIN 53582,
(VIII) from 0.1 to 100 parts by weight of a component (H), based on component (A), composed of an inorganic filler,
where, in a first step, components (F) and (H) are respectively separately processed with a portion of component (A) and component (G) is processed with component (E), and then, in a second step, all of the mixtures thus generated are further processed with components (B), (C) and (D) and the remainder of component (A), and the materials composition has flowability (melt flow ratio) to DIN ISO 1133 of greater than 8, measured using 280°C/5 kg, impact resistance to ISO 179 without fracture, coefficient of linear expansion to DIN 53752 at from 23 to 80°C smaller than 80 × 10⁻⁵ K⁻¹, with volume resistivity smaller than 10¹⁰ ohms cm.

2. High-temperature-resistant materials composition according to Claim 1, **characterized in that** the nylon-6,6 of component (A) preferably comprises a heat-aging-resistant nylon-6,6 with intrinsic viscosity smaller than 175 ml/g to ISO 307, measured in 96% strength sulphuric acid.

3. High-temperature-resistant materials composition according to Claim 1, **characterized in that** the nylon-6 of component (B) preferably has an intrinsic viscosity of from 115 to 135 ml/g to ISO 307, measured in 96% strength sulphuric acid.

4. High-temperature-resistant materials composition according to Claim 1, **characterized in that** the syndiotactic polystyrenehomo- or copolymer of component (C) has a molar mass Mw of from 160 to 199 kg/mol to DIN 55672.

5. High-temperature-resistant materials composition according to Claim 1, **characterized in that** component (D) is a polystyrene graft copolymer composed of syndiotactic polystyrene, produced via grafting of maleic anhydride or itaconic anhydride, or (meth)acrylic acid or ester thereof.

6. High-temperature-resistant materials composition according to Claim 1, **characterized in that** the impact modifier of component (E) has been selected from the group of
- natural rubber, polybutadiene, polyisoprene, polyisobutylene, copolymers of butadiene and/or of isoprene with styrene and with other comonomers, or
- a hydrogenated copolymer and/or a copolymer that can be obtained via rafting with maleic anhydride, itaconic anhydride, (meth)acrylic acid or ester thereof, or
- a graft rubber having a crosslinked elastomeric core which is composed of butadiene or of isoprene or of alkyl acrylates and having a graft shell composed of polystyrene, or
- a non-polar or polar olefin homo- or copolymer, e.g. ethylene-propylene rubber, ethylene-propylene-diene rubber and ethylene-octene rubber or ethylene-vinyl acetate rubber, or
- a non-polar or polar olefin homo- or copolymer produced via grafting with maleic anhydride, itaconic anhydride, (meth)acrylic acid or ester thereof, or
- a carboxylic-acid-functionalized copolymer, e.g. poly(ethene-co-(meth)acrylic acid) or poly(ethene-co-1-olefin-co-(meth)acrylic acid), where the 1-olefin is an alkene or an unsaturated (meth)acrylic ester having more than 4 atoms, inclusive of those copolymers in which the acid groups have been to some extent neutralized with metal ions.

7. High-temperature-resistant materials composition according to Claim 6, **characterized in that** the impact modifier of component (E) is particularly preferably a copolymer of butadiene with styrene, functionalized via grafting with maleic anhydride, and/or is a non-polar or polar olefin homo- or copolymer, produced via grafting with maleic anhydride.

8. High-temperature-resistant materials composition according to Claim 1, **characterized in that** the inorganic filler of component (H) has been selected from the group of magnesium hydroxide, calcium carbonate, talc, wollastonite, silica, or cation- or anion-exchange-modified silicates having ionic layer charges, preferably slurried in oil components or in fat components.

9. Use of the high-temperature-resistant materials composition according to any of Claims 1 to 8 preferably for the production of coated mouldings for the automobile industry, in particular coated exterior add-on mouldings on automobiles.

10. Process for the production of the high-temperature-resistant materials composition according to any of Claims 1 to 8, where, in a first step, components (F) and (H) are respectively separately processed with a portion of component (A) and component (G) is processed with component (E), and then, in a second step, all of the mixtures thus generated are further processed with components (B), (C) and (D) and the remainder of component (A).

11. Process for the production of the high-temperature-resistant materials composition according to Claim 10, where the precompound 3 composed of components (A) and (H) is compounded in a twin-screw extruder, and the precompounds 1 composed of components (E) and (G) and 2 composed of components (A) and (F) are compounded by means of an apparatus which gives low energy input into the mixture.

12. Process for the production of the high-temperature-resistant materials composition according to Claim 10 or 11, where the proportion by weight of the precompound 1 composed of components (E) and (G), based on component (A), is selected to be from 0.1 to 50 parts, or where the proportion by weight of the precompound 2 composed of components (A) and (F), based on component (A), is selected to be from 0.1 to 100 parts.

13. Process for the production of the high-temperature-resistant materials composition according to any of Claims 10 to 12, where the ratio of precompound 1 composed of components (E) and (G) to precompound 2 composed of components (A) and (F) is preferably selected to be from 1:5 to 5:1, and the ratio of precompound 1 composed of components (E) and (G) to precompound 2 composed of components (A) and (F) is very particularly preferably selected to be from 1:1 to 1:3.

## Revendications

1. Composition de matériau résistant à haute température, à base de matières thermoplastiques partiellement cristallines à propriétés mécaniques améliorées, consistant en au moins les composants suivants :
(I) 100 parties en poids d'un composant (A) consistant en un polyamide 66,
(II) 0,1 à 150 parties en poids d'un composant (B), par rapport au composant (A), consistant en un polyamide 6,
(III) 0,1 à 150 parties en poids d'un composant (C), par rapport au composant (A), consistant en un homopolymère polystyrène ou copolymère de polystyrène syndiotactique,
(IV) 0,1 à 50 parties en poids d'un composant (D), par rapport au composant (A), consistant en un homopolymère polystyrène ou copolymère de polystyrène syndiotactique greffé,
(V) 0,1 à 50 parties en poids d'un composant (E), par rapport au composant (A), consistant en un modificateur antichoc,
(VI) 0,1 à 100 parties en poids d'un composant (F), par rapport au composant (A), consistant en un premier noir de carbone qui présente une adsorption d'iode, selon DIN 53582, de moins de 150 mg/g,
(VII) 0,1 à 100 parties en poids d'un composant (G), par rapport au composant (A), consistant en un deuxième noir de carbone qui présente une adsorption d'iode, selon DIN 53582, de plus de 700 mg/g,
(VIII) 0,1 à 100 parties en poids d'un composant (H), par rapport au composant (A), consistant en une charge inorganique,
dans laquelle, dans une première étape on fait réagir chacun séparément les composants (F) et (H) avec une partie du composant (A) et le composant (G) avec le composant (E), avant de faire à nouveau réagir, dans une deuxième étape, tous les mélanges ainsi engendrés avec les composants (B), (C) et (D) et le reste du composant (A), et la composition de matériau présente une fluidité à chaud (*melt flow index*) selon DIN ISO 1133, supérieure à 8, mesurée à 280°C/5 kg, une résistance au choc selon ISO 179 sans rupture, un coefficient d'allongement longitudinal selon DIN 53752 à 23-80 °C inférieur à 80 × 10⁻⁵ K⁻¹, à une résistivité volumique inférieure à 10¹⁰ ohms.cm.

2. Composition de matériau résistant à haute température selon la revendication 1, **caractérisée en ce que** le polyamide 66 du composant (A) comporte de préférence un polyamide 66 stabilisé vis-à-vis du vieillissement à la chaleur, ayant un indice de viscosité selon ISO 307, mesuré dans de l'acide sulfurique à 96 %, de moins de 175 ml/g.

3. Composition de matériau résistant à haute température selon la revendication 1, **caractérisée en ce que** le polyamide 6 du composant (B) présente de préférence un indice de viscosité selon ISO 307, mesuré dans de l'acide sulfurique à 96 %, de 115 à 135 ml/g.

4. Composition de matériau résistant à haute température selon la revendication 1, **caractérisée en ce que** l'homopolymère polystyrène ou le copolymère de polystyrène syndiotactique du composant (C) présente une masse moléculaire Mw selon DIN 55672 de 160 à 199 kg/mole.

5. Composition de matériau résistant à haute température selon la revendication 1, **caractérisée en ce que** le composant (D) est un copolymère greffé de polystyrène à base de polystyrène syndiotactique, obtenu par greffage d'anhydride maléique ou d'anhydride itaconique, ou d'acide (méth)acrylique et de ses esters.

6. Composition de matériau résistant à haute température selon la revendication 1, **caractérisée en ce que** le modificateur antichoc du composant (E) est choisi dans le groupe constitué par
- le caoutchouc naturel, le polybutadiène, le polyisoprène, le polyisobutylène, des copolymères du butadiène et/ou de l'isoprène avec le styrène et d'autres comonomères, ou
- un copolymère hydrogéné et/ou un copolymère qui est obtenu par greffage avec de l'anhydride maléique, de l'anhydride itaconique, de l'acide (méth)acrylique et ses esters, ou
- un caoutchouc greffé comportant un noyau élastomère réticulé qui consiste en butadiène, isoprène ou acrylates d'alkyle et comporte une enveloppe greffée en polystyrène, ou
- un homopolymère ou copolymère d'oléfine polaire ou non polaire, tel qu'un caoutchouc éthylène-propylène, éthylène-propylène-diène et éthylène-octène ou éthylène-acétate de vinyle, ou
- un homopolymère ou copolymère d'oléfine polaire ou non polaire qui est obtenu par greffage avec de l'anhydride maléique, de l'anhydride itaconique, de l'acide (méth)acrylique et ses esters, ou
- un copolymère fonctionnalisé avec un acide carboxylique, tel qu'un copolymère éthène/acide (méth)acrylique ou un copolymère éthène/1-oléfine/acide (méth)acrylique, l'oléfine étant un alcène ou un ester d'acide (méth)acrylique insaturé ayant plus de 4 atomes de carbone, y compris les copolymères dans lesquels les groupes acides sont partiellement neutralisés avec des ions métalliques.

7. Composition de matériau résistant à haute température selon la revendication 6, **caractérisée en ce que** le modificateur antichoc du composant (E) est de façon particulièrement préférée un copolymère du butadiène avec le styrène, fonctionnalisé par greffage avec de l'anhydride maléique et/ou un homopolymère ou copolymère d'oléfine polaire ou non polaire, qui est obtenu par greffage avec de l'anhydride maléique.

8. Composition de matériau résistant à haute température selon la revendication 1, **caractérisée en ce que** la charge inorganique du composant (H) est choisie dans le groupe constitué par l'hydroxyde de magnésium, le carbonate de calcium, le talc, la wollastonite, l'acide silicique ou des silicates à charges ioniques de couches, modifiés par échange de cations ou d'anions, de préférence des composants de type huile ou graisse mis en suspension.

9. Utilisation de la composition de matériau résistant à haute température selon l'une quelconque des revendications 1 à 8, de préférence pour la production de pièces moulées peintes pour l'industrie de l'automobile, en particulier des pièces moulées peintes de construction extérieure sur des automobiles.

10. Procédé pour la préparation de la composition de matériau résistant à haute température selon l'une quelconque des revendications 1 à 8, dans lequel on fait réagir dans une première étape chacun séparément les composants (F) et (H) avec une partie du composant (A) et le composant (G) avec le composant (E), avant de faire à nouveau réagir, dans une deuxième étape, tous les mélanges ainsi engendrés avec les composants (B), (C) et (D) et le reste du composant (A).

11. Procédé pour la préparation de la composition de matériau résistant à haute température selon la revendication 10, dans lequel on prépare sur une extrudeuse double vis le pré-mélange 3 à partir des composants (A) et (H) et on incorpore les pré-mélanges 1 des composants (E) et (G) et 2 à partir des composants (A) et (F) au moyen d'un dispositif qui introduit peu d'énergie dans le mélange.

12. Procédé pour la préparation de la composition de matériau résistant à haute température selon la revendication 10 ou 11, dans lequel la proportion pondérale du mélange 1 des composants (E) et (G), par rapport au composant (A), est comprise entre 0,1 et 50 parties, ou dans lequel la proportion pondérale du pré-mélange 2 des composants (A) et (F), par rapport au composant (A), est choisie entre 0,1 et 100 parties.

13. Procédé pour la préparation de la composition de matériau résistant à haute température selon l'une quelconque des revendications 10 à 12, dans lequel de préférence on choisit un rapport du pré-mélange 1 des composants (E) et (G) au pré-mélange 2 des composants (A) et (F) entre 1:5 et 5:1, et de façon tout particulièrement préférée un rapport du pré-mélange 1 des composants (E) et (G) au pré-mélange 2 des composants (A) et (F) de 1:1 à 1:3.
